# FASCICULE DE BREVET EUROPEEN

(11) **EP 2 509 448 B1**
(45) Date de publication et mention de la délivrance du brevet: **23.09.2015**
(21) Numéro de dépôt: 10773713.2
(22) Date de dépôt: 21.10.2010
(51) Int. Cl.: A23L 1/22, A23L 1/237

(54) **NOUVEL AGENT SUBSTITUT DE NaCl**
NEUARTIGES NACL-SUBSTITUT
NOVEL NACL SUBSTITUTE AGENT

(30) Priorité: 08.12.2009 FR 0905928
(43) Date de publication de la demande: 17.10.2012
(73) Titulaire: Lesaffre et Compagnie, 75001 Paris (FR)
(72) Inventeur: LEJEUNE, Pascal, F-59200 TOURCOING (FR); DUPUY-CORNUAILLE, Camille, F-59700 MARCQ-EN-BAROEUL (FR); BULTEL, Michael, F-59166 BOUSBECQUE (FR)
(74) Mandataire: Cabinet Plasseraud
(86) Numéro de dépôt international: PCT/IB2010/054782
(87) Numéro de publication internationale: WO 2011/070454

(56) Documents cités:
- EP-A1- 0 103 994
- WO-A1-2008/074770
- WO-A1-2009/116050
- FR-A1- 2 900 799
- FR-A1- 2 922 728
- GB-A- 1 502 961

## Description

L'invention se rapporte à un nouvel agent substitut de sel (NaCl), à une composition destinée à l'alimentation humaine et/ou animale comprenant cet agent, et à une utilisation de cet agent comme substituant total ou partiel de NaCl.

Il existe, depuis de nombreuses années, une demande visant à réduire la quantité de sodium présente dans l'alimentation en général, en particulier dans tous les aliments identifiés comme des vecteurs importants d'apports de sels, tels que les produits de panification et de biscotterie, la charcuterie, les soupes, les plats préparés, les condiments et les sauces. La consommation excessive de sodium a des conséquences très néfastes sur la santé, et peut favoriser en particulier l'hypertension artérielle. Un certain nombre d'organismes de Santé Publique dans le monde recommandent ou imposent ainsi de réduire cette consommation en sodium dans l'alimentation.

Toutefois, le sel joue un rôle fondamental en panification, et constitue un agent technologique difficilement remplaçable. En effet, outre son rôle gustatif, le sel améliore les propriétés physiques de la pâte, et agit notamment sur la structure du réseau de gluten, sur l'oxydation de la pâte par un effet antioxydant qui retarde le blanchiment et la perte de goût du pain qui résulte du pétrissage intensif Le sel joue aussi un rôle sur la coloration de la croûte du pain lors de la cuisson, sur la conservation du pain, sur l'activité fermentaire de la levure en la ralentissant, influençant alors le déroulement des étapes de pointage et d'apprêt.

L'effet gustatif et exhausteur de goût du sel ainsi que son influence directe sur les qualités texturales du pain en font un ingrédient ayant un rôle important en panification.

Par conséquent, la réduction de la quantité de sel en panification pose des problèmes techniques aux professionnels de la boulangerie. En effet, cette réduction de sel conduit à des inconvénients, sur la pâte boulangère, bien connus lors de son travail du fait de la perte de la solidité du réseau de gluten. Cette perte de solidité se traduit, le plus souvent, sur la pâte par au moins l'un des aspects suivants : un relâchement et un aspect collant, un excès d'extensibilité rendant son travail difficile, un manque de tenue du fait d'une perte importante de CO₂ lors de la fermentation (phase d'apprêt) dû à une augmentation de la porosité accrue du réseau de gluten vis-à-vis du CO₂.

Au final, cette réduction de sel provoque généralement également des inconvénients sur le pain qui présente alors un goût fade, une croûte de couleur pâle, une mie trop blanche, une perte de volume et une dégradation de l'aspect.

Différentes solutions ont déjà été proposées pour diminuer la quantité de sel lors de la fabrication du pain, telles que l'ajout de composés minéraux, de composés issus du lait, des arômes. Mais les solutions proposées jusqu'ici restent insatisfaisantes sur le plan organoleptique, et sont encore incomplètes, techniquement complexes voire onéreuses. De plus, l'origine généralement non panaire de ces solutions freine leur acceptation par la profession boulangère.

WO 2009/116050 A1 décrit une composition comprenant du chlorure de potassium et des levures dénaturées ainsi que l'utilisation de cette composition dans la fabrication de produits alimentaires, en tant que substitut de NaCl, et en tant que produit d'assaisonnement.

Aussi il subsiste le besoin de pouvoir disposer d'un nouvel agent substitut de NaCl, simple et naturel, pouvant remplacer totalement ou partiellement NaCl dans la fabrication panaire, tout en permettant de conserver les modes opératoires connus de fabrication de pâte boulangère, les caractéristiques rhéologiques connues d'une bonne pâte boulangère, et également les bonnes qualités physiques et gustatives du pain issu d'une telle pâte boulangère cuite.

L'invention a donc pour objet un agent substitut de NaCl qui comprend de la levure désactivée et un composé salant choisi parmi NaCl, un sel de potassium, un sel d'ammonium, un sel de magnésium et leur mélange.

L'agent substitut de sel selon l'invention présente l'avantage de diminuer, de manière très significative (jusqu'à 100% dans certains type d'applications), la quantité de NaCl dans les produits de panification, tout en leur permettant de conserver un effet salant suffisant même lorsque l'agent est utilisé en faible quantité.

Enfin, le pain comprenant l'agent substitut de sel selon l'invention présente l'avantage de conserver les mêmes caractéristiques physico-chimiques et gustatives que du pain ne comprenant que du NaCl, à savoir, une croûte croustillante, une mie moelleuse et correctement alvéolée, et une saveur normalement et habituellement salée.

Un autre objet de l'invention est une composition destinée à l'alimentation humaine et/ou animale comprenant l'agent tel que défini précédemment.

Un troisième objet de l'invention est une utilisation de l'agent, tel que défini précédemment, comme substitut total ou partiel de NaCl dans la fabrication panaire.

De préférence, la fabrication panaire est celle du « pain de tradition française ».

Enfin un dernier objet de l'invention est une utilisation de l'agent, tel que défini précédemment, comme substitut total ou partiel de NaCl dans les plats culinaires préparés.

L'agent selon l'invention peut comprendre uniquement de la levure désactivée et/ou de levure désactivée comprenant un extrait de céréale, tel qu'un extrait de malt ou un malt de céréales. Cette levure désactivée peut être obtenue par co-séchage avec un extrait de céréale. L'extrait de céréale peut être un extrait de malt.

La levure désactivée est une levure dite « morte », pouvant être obtenue par différents moyens, telles qu'une désactivation thermique, mélangée éventuellement à un extrait de céréale, tel qu'un extrait de malt, ou avec un malt de céréale. La levure utilisée est de préférence une levure appartenant au genre Saccharomyces, et plus préférentiellement à l'espèce *Saccharomyces, cerevisiae,* y compris celle appelée *Saccharomyces carlsbergensis.*

Contrairement à un extrait de levure, qui ne comprend que la partie soluble d'une levure, la levure désactivée comprend l'intégralité de ladite levure, constituée d'une partie soluble et d'une partie insoluble.

Par ailleurs, la levure désactivée est techniquement beaucoup plus simple à obtenir puisqu'il n'y a aucune étape de séparation contrairement aux extraits de levure. De plus, contrairement aux extraits de levure, l'obtention de levure désactivée ne nécessite ni d'étape d'autolyse ni de moyens physico-chimiques et/ou biologiques destinés à optimiser la solubilisation des composants entrant dans la constitution de l'extrait de levure.

Par conséquent, la levure désactivée est un constituant qui ne nécessite pas de coût élevé à sa production.

Le sel de potassium est de préférence KCl, le sel d'ammonium NH₄Cl, et le sel de magnésium MgCl₂.

Le rapport composé salant/levure désactivée peut être compris entre 1 et 5,7 ; et le rapport NaCl/composé salant peut être compris entre 0 et 100% en poids par rapport au poids total du composé salant.

L'agent selon l'invention peut comprendre en outre un autre agent substitut de sel choisi parmi les composés minéraux, les composés issus du lait, les arômes, et leur mélange.

Parmi les composés minéraux, on peut trouver le chlorure de potassium, le chlorure d'ammonium, le gluconate de sodium, le lactate de potassium. Parmi les composés issus du lait, on peut trouver les matières minérales issues du lait, les dérivés du lait.

L'agent selon l'invention peut par ailleurs comprendre un améliorant de panification choisi parmi l'acide ascorbique, les émulsifiants, les agents stabilisants-épaississants, les enzymes et leur mélange. L'agent selon l'invention peut comprendre un ou plusieurs ingrédients présentant un effet améliorant, tels que le L-cystéine, les agents stabilisants-épaississants comme la farine prégélatinisée, les amidons modifiés, la carboxyméthylcellulose, des gommes telles que la gomme de xanthane, des extraits d'algues comme des alginates ou des carraghénanes ou les mélanges de ces constituants, des émulsifiants comme la lécithine, les mono- et diglycérides d'acides gras ou les esters diacétyltartriques de mono et diglycérides d'acides gras ou les mélanges de ces constituants, des enzymes comme les amylases, telle que l'alpha-amylase, l'alpha-amylase maltogène ou d'autres alpha-amylases antirassissantes, des hémicellulases telles que les xylanases, les glucoses oxydases, les amyloglucosidases, les lipases les phospholipases, des farines de céréales.

L'améliorant peut se présenter sous forme sèche ou liquide. Son rôle principal est d'accentuer la fonction oxydante de la levure. Par ailleurs, il peut être ajouté pour compenser le relâchement de la pâte à pain.

Selon sa nature chimique, et notamment lorsqu'il est choisi parmi l'acide ascorbique, certains bromates, l'améliorant peut être présent en une quantité allant d'environ 10 à 200ppm, préférentiellement entre 10 et 80ppm, et plus préférentiellement entre 20 et 50ppm par rapport au poids de farine.

Lorsqu'il est choisi parmi des composés, tels que le gluten vital, il peut être présent en une quantité allant d'environ 0,3 à 2% en poids, et préférentiellement entre 0,5 et 2% en poids par rapport au poids de farine.

La composition selon l'invention peut par ailleurs comprendre au moins un additif choisi parmi les agents texturants, tels que la cellulose microcristalline ; le dextrose ou le stéarate de magnésium, des adjuvants, des agents antiagglomérants, tels que le silicate de calcium, des agents anti-mottants, tels que les fibres de blé, ou des auxiliaires technologiques. Il pourra s'agir également de composés qui ont un intérêt en terme de santé publique, tels que le fluor et l'iode ou d'autres sels tels que les sels de magnésium.

La composition comprenant l'agent selon l'invention peut être celle d'une pâte à pain, d'une pâte à brioche ou de toutes autres pâtes pour produits de panification (boulangerie, viennoiserie, pizza, etc....) quelles qu'elles soient, ou de tous plats cuisinés préparés.

L'agent selon l'invention peut être utilisé aussi bien en panification que dans l'industrie des plats préparés, dans les aides culinaires tels que les bouillons de légumes ou de viande.

L'agent utilisé selon l'invention peut comprendre de la levure désactivée seule et/ou de la levure désactivée comprenant un extrait de céréale, en une quantité allant d'environ 0,4 à 1 % en poids, de préférence de 0,6 à 0,8% en poids, et encore plus préférentiellement de 0,7 % en poids par rapport au poids total de farine lors de fabrication panaire.

Le composé, salant peut être présent en une quantité allant d'environ 0,9% à 1,6% en poids par rapport au poids total de farine en fabrication panaire, au lieu d'une proportion comprise entre 1,8% et 2,4% en poids par rapport au poids total de farine dans les préparations de pâte à pain connues jusqu'ici.

Ainsi l'utilisation de l'agent selon l'invention peut permettre la diminution du taux de NaCl entre 15% et 100% en poids, et de préférence entre 20% et 50% en poids et plus préférentiellement entre 20 et 30% en poids par rapport au poids total de farine.

L'invention va maintenant être illustrée à l'aide des exemples qui suivent et qui sont donnés uniquement à titre d'illustration

### EXEMPLE 1 - Pain de tradition française

Deux compositions 1 et 2 de pâte à pain, type « Pain de tradition française » ont été préparées, la première, classique et connue (témoin) comprenant 2,2% en poids de NaCl par rapport au poids total de farine, la seconde, comprenant l'agent selon l'invention avec 1,6% en poids de NaCl et 0,7% de levure désactivée par rapport au poids total de farine.

Ces deux compositions ont été préparées en utilisant le même schéma de panification, schéma dit « Pousse en bac » de 16 à 24 heures. Ce schéma est généralement utilisé pour obtenir des pains de type « Pain de tradition française ».

L'utilisation de ce schéma de panification permet d'obtenir un pain ayant les principales qualités organoleptiques suivantes :
- mie de couleur crème et ayant une texture correctement alvéolée,
- développement optimal du volume de la pâte après fermentation,
- goût et arômes agréables du pain,
- conservation de la fraicheur du pain.

### Composition 1 témoin

- Farine de blé dite de « tradition » type 65 100%
- Eau 65%
- NaCl 2,2%
- Levure pressée 0,5%

### Composition 2 selon l'invention

- Farine de blé dite de « tradition » type 65 100%
- Eau 65%
- Levure pressée 0,5%
- NaCl 1,6%
- Levure désactivée 0,7%

La quantité de NaCl est donc respectivement, pour les compositions 1 et 2, de 2,2% et 1,6% en poids par rapport au poids de farine. Ceci revient à effectuer une diminution d'environ 27% de NaCl.

Ces deux compositions sont donc mélangées, pétries, mises à fermenter et cuites indépendamment l'une de l'autre selon le mode opératoire suivant :

### Etape 1 : Pétrissage

Les compositions 1 et 2 sont pétries, à une température d'environ 25°C, soit dans un pétrin à spirale, vitesse 1 (4min), puis vitesse 2 (1,30min), soit dans un pétrin à axe oblique, vitesse 1 (6min) puis vitesse 2 (5min).

On observe un lissage légèrement plus rapide mais non significatif avec la composition 2.

### Etape 2 : Pointage (première fermentation)

Cette étape est effectuée à une température d'environ 25°C pendant 1 heure. La pâte est ensuite rabattue, puis mise en chambre à 5°C pendant 24 heures.

On observe un démarrage de la fermentation légèrement plus rapide avec la composition 2, et une pâte sensiblement plus souple. Aucune correction n'est nécessaire dans la mesure où les modifications rhéologiques sont peu significatives.

### Etape 3 : Pousse en bac

Cette étape de maturation est effectuée pendant 24 heures, à 5°C.

Aucune différence n'est observée entre les deux compositions.

### Etape 4 : Réchauffe

Cette étape dure 2 heures à 25°C.

La composition 2 donne une pâte légèrement plus extensible que celle de la composition 1.

### Etape 5 : Division, mise en forme et détente (seconde fermentation)

La division, effectuée manuellement de manière à optimiser l'alvéolage des produits finis, donne des pâtons d'environ 350g chacun.

Les pâtons sont soumis à un boulage classique pour la composition 1, et à un boulage plus serré pour la composition 2 dans la mesure où la pâte étant un peu plus extensible, un boulage serré permet une meilleure prise de force.

La détente dure ensuite 15 minutes.

### Etape 6 : Façonnage

Cette étape est assurée manuellement (méthode recommandée) ou mécaniquement avec des rouleaux desserrés afin d'assurer un bel alvéolage du produit fini.

Les deux compositions se comportent de manière similaire.

### Etape 7 : Apprêt (troisième fermentation)

Cette étape dure environ 30min, à température ambiante (environ 25°C)

Aucune différence notable n'est observée avec les deux compositions, ni en degré de pousse, ni en tolérance.

### Etape 8 : Cuisson

Cette dernière étape est effectuée sur sole 20 minutes à 250°C.

Aucune différence n'est observée avec les deux compositions, ni en développement au four, ni en coups de lame, ni en coloration de croûte.

Ces deux compositions 1 et 2 montrent qu'une réduction d'environ 27% de NaCl dans une composition de pâte boulangère permet de conserver les qualités organoleptiques du pain.

Ces deux compositions ont fait l'objet d'un test d'analyse sensoriel, dénommé test triangulaire. L'objectif de ce test a pour but de mettre en évidence les différences entre deux produits sans que les caractéristiques sur lesquelles portent ces différences soient identifiées. Ce test est utilisé quand les différences attendues sont faibles.

Le principe de ce test est le suivant : trois échantillons codés sont présentés, deux sont identiques (proviennent du même produit), le troisième étant à priori différent (provient d'un autre produit). La personne qui teste doit déterminer l'échantillon non répété, c'est-à-dire l'échantillon différent des deux autres. Il s'agit d'une épreuve à choix forcé. La plus grande vigilance doit être apportée à l'homogénéité du contenant, à la quantité présentée ainsi qu'à tout autre facteur pouvant permettre une reconnaissance de l'échantillon unique.

L'interprétation des résultats se fait de la manière suivante. Pour savoir s'il existe une différence significative au niveau global, il suffit de comptabiliser le nombre de réponses correctes et de comparer la valeur obtenue à celle figurant dans la table de la loi binomiale pour une probabilité de 1/3. Les conclusions sur une différence significative ou non entre les deux produits sont données à un seuil inférieur à 5% (Evaluation sensorielle, manuel méthodologique, seconde Edition Lavoisier, TEC et DOC).

Sur les exemples 1 et 2, ce test ne montre aucune différence sigriificative concernant la texture croustillante de la croûte, la texture moelleuse de la mie et la saveur salée entre la composition 1 témoin et la composition 2.

### EXEMPLE 2 - Bun's

Deux compositions 3 et 4 de Bun's ont été préparées, la première, classique et connue (témoin) comprenant 1,8% en poids de NaCl par rapport au poids total de farine, la seconde, comprenant l'agent selon l'invention avec 1,2% en poids de NaCl et 0,7% de levure désactivée par rapport au poids total de farine.

Ces deux compositions ont été préparées en utilisant le même schéma de panification, à savoir un schéma dit « sponge and dough » où les 2/3 de l'eau et la levure font l'objet d'une préfermentation pendant 4 heures à 24°C.

### Composition 3 témoin

- Farine 100%
- Eau 55%
- Levure pressée 2,9%
- Améliorant 0,6%
- Farine de soja 0,4%
- Huile 4%
- NaCl 2%

### Composition 4 selon l'invention

- Farine 100%
- Eau 55%
- Levure pressée 2,9%
- Améliorant 0,6%
- Farine de soja 0,4%
- Huile 4%
- NaCl 1,33%
- Levure désactivée 0,7%

La quantité de NaCl est donc respectivement, pour les compositions 3 et 4, de 1,8% et 1,2% en poids par rapport au poids de farine. Ceci revient à effectuer une diminution d'environ 33% de NaCl.

Ces deux compositions sont donc mélangées, pétries, mises à fermenter et cuites indépendamment l'une de l'autre selon le mode opératoire suivant :
Les compositions 3 et 4 sont pétries dans un pétrin à spirale à une température d'environ 25°C, soit dans un pétrin à spirale, vitesse 1 (2min), puis vitesse 2 (3min). Le pointage est ensuite effectué à une température d'environ 28°C pendant environ 5minutes. La pâte est ensuite divisée en pâtons d'environ 90 g chacun. La détente (seconde fermentation) dure environ 57min à 37°C.

Les pâtons sont ensuite cuits sur sole, 12 minutes à 235°C.

Les qualités organoleptiques du pain obtenu selon la composition de l'invention, avec une diminution de la quantité de NaCl d'environ 33%, restent inchangées par rapport au pain témoin.

En effet, le test triangulaire (exposé dans l'exemple 1) donne 48% de réponses fausses contre 52% de réponses correctes. Par conséquent, il n'y a aucune différence significative entre la composition 3 témoin et la composition 4 selon l'invention.

### EXEMPLE 3 - Bun's

Deux compositions 5 et 6 de Bun's ont été préparées selon le même mode opératoire que dans l'exemple 2.

La composition 5 (témoin) comprend 1,8% en poids de NaCl par rapport au poids total de farine, la composition 6 (selon l'invention) comprend 1% en poids de NaCl et 0,7% de levure désactivée par rapport au poids total de farine.

La diminution de NaCl dans la composition 6 est d'environ 45% par rapport à la composition 5 (témoin).

On observe que les qualités organoleptiques du pain obtenu selon la composition de l'invention, avec une diminution de la quantité de NaCl d'environ 45%, restent inchangées par rapport au pain témoin.

En effet, le test triangulaire (exposé dans l'exemple 1) donne 57% de réponses fausses contre 43% de réponses correctes. Par conséquent, il n'y a aucune différence significative entre la composition 5 témoin et la composition 6 selon l'invention.

### EXEMPLE 4 - Pain « Baltonowski »

On prépare en premier lieu une composition de levain qui comprend les éléments suivants :
- Farine de seigle T720 100%
- Eau 55%
- Starter LV4 Lesaffre 0,5%

Ce levain est préparé dans un pétrin à spirale pendant 5 minutes, puis laissé à maturation environ 20 heures à 35°C. Il est utilisé dans la préparation des compositions de pâtes boulangères suivantes :
Deux compositions 7 et 8 de pains polonais dits « Baltonowski » ont été préparées, la première, classique et connue (témoin) comprenant 1,8% en poids de NaCl par rapport au poids total de farine, la seconde, comprenant l'agent selon l'invention avec 0,9% en poids de NaCI et 0,6% de levure désactivée par rapport au poids total de farine.

Ces deux compositions ont été préparées en utilisant le même schéma de panification.

### Composition 7 témoin

- Farine de seigle T720 40%
- Farine de blé T750 60%
- Eau 57%
- NaCl 1,8%
- Levure pressée 3%
- Starter LV4 Lesaffre 0,2%

### Composition 8 selon l'invention

- Farine de seigle T720 40%
- Farine de blé T750 60%
- Eau 57%
- NaCl 0,9%
- Levure pressée 3%
- Starter LV4 Lesaffre 0,2%
- Levure désactivée 0,6%

La quantité de NaCl est donc respectivement, pour les compositions 7 et 8, de 1,8% et 0,9% en poids par rapport au poids de farine. Ceci revient à effectuer une diminution d'environ 50% de NaCl.

Ces deux compositions sont donc mélangées, pétries, mises à fermenter et cuites indépendamment l'une de l'autre selon le mode opératoire suivant :
Les compositions 7 et 8 sont pétries dans un pétrin à spirale, vitesse 1 (7min), puis vitesse 2 (1,30min). Le pointage est ensuite effectué à une température d'environ 28°C pendant environ 4heures: La pâte est ensuite divisée en pâtons d'environ 600g. l'apprêt (fermentation finale) dure environ 60 minutes à 35°C.

Les pâtons sont ensuite cuits sur sole, 10 minutes à 230°C, puis 28 minutes environ à 220°C.

On observe que les qualités organoleptiques du pain obtenu selon la composition de l'invention, avec une diminution de la quantité de NaCl d'environ 50%, restent inchangées par rapport au pain témoin.

En effet, le test triangulaire (exposé dans l'exemple 1) donne 44% de réponses fausses contre 56% de réponses correctes. Par conséquent, il n'y a aucune différence significative entre la composition 7 témoin et la composition 8 selon l'invention.

### EXEMPLE 5 - Boule au levain

Deux compositions 9 et 10 de boule au levain ont été préparées, la première, classique et connue (témoin) comprenant 2% en poids de NaCl par rapport au poids total de farine, la seconde, comprenant l'agent selon l'invention avec 1,4% en poids de NaCl et 0,7% de levure désactivée par rapport au poids total de farine.

Ces deux compositions ont été préparées en utilisant le même schéma de panification.

### Composition 9 témoin

- Farine de tradition 90%
- Farine de seigle T170 10%
- Eau 54%
- Sel 2,2%
- Crème de levain 5%

### Composition 10 selon l'invention

- Farine de tradition 90%
- Farine de seigle T170 10%
- Eau 54%
- Sel 1,4%
- Crème de levain 5%
- Levure désactivée 0,7%

La quantité de NaCl est donc respectivement, pour les compositions 9 et 10, de 2% et 1,4% en poids par rapport au poids de farine. Ceci revient à effectuer une diminution d'environ 36% de NaCl.

Ces deux compositions sont donc mélangées, pétries, mises à fermenter et cuites indépendamment l'une de l'autre selon le mode opératoire suivant :

Les compositions 9 et 10 sont pétries dans un pétrin soit dans un pétrin oblique vitesse (8 min), puis vitesse 2 (2min), soit dans un pétrin à spirale à une température d'environ 25°C, vitesse 1 (5min), puis vitesse 2 (30secondes).

Le pointage est ensuite effectué à une température d'environ 23°C pendant environ 14 heures ou 12 heures à 25°C. La pâte est ensuite divisée en pâtons d'environ 1000 g chacun. La détente (seconde fermentation) dure environ de 20 à 30min. Des boules sont ensuite façonnées, puis mises en seconde fermentation (phase d'apprêt) pendant 3 heures à 25°C avant d'être cuites 50 minutes à 230°C dans un four à soles.

On observe que les qualités organoleptiques du pain obtenu selon la composition de l'invention, avec une diminution de la quantité de NaCl d'environ 36%, restent inchangées par rapport au pain témoin.

En effet, le test triangulaire (exposé dans l'exemple 1) donne 61% de réponses fausses contre 39% de réponses correctes. Par conséquent, il n'y a aucune différence significative entre la composition 9 témoin et la composition 10 selon l'invention.

## Revendications

1. Agent substitut de sel (NaCl), **caractérisé en ce qu'**il comprend de la levure désactivée et un composé salant choisi parmi NaCl, un sel de potassium, un sel d'ammonium, un sel de magnésium et leur mélange.

2. Agent selon la revendication 1, **caractérisé en ce que** le rapport composé salant / levure désactivée est compris entre 1 et 5,7.

3. Agent selon l'une des revendications 1 ou 2, **caractérisé en ce que** la teneur en NaCl par rapport au composé salant est comprise entre 0 et 100% en poids par rapport au poids du composé salant.

4. Agent selon la revendication 1, **caractérisé en ce que** la levure désactivée est choisie parmi la levure désactivée seule, la levure désactivée comprenant un extrait de céréale, et leur mélange.

5. Agent selon la revendication 1, **caractérisé en ce que** le sel de potassium est KCl, **en ce que** le sel d'ammonium est NH₄Cl et **en ce que** le sel de magnésium est MgCl₂.

6. Agent selon l'une des revendications 1 ou 4, **caractérisé en ce que** la levure appartient au genre Saccharomyces, et plus préférentiellement à l'espèce *Saccharomyces, cerevisiae.*

7. Agent selon la revendication 4, **caractérisé en ce que** l'extrait de céréale est un extrait de malt.

8. Agent selon l'une des revendications 1 à 7, **caractérisé en ce qu'**il comprend en outre un autre agent substitut de sel choisi parmi les composés minéraux, les composés issus du lait, les arômes, et leur mélange.

9. Agent selon l'une des revendications 1 à 8, **caractérisé en ce qu'**il comprend en outre un améliorant de panification choisi parmi l'acide ascorbique, les émulsifiants, les agents stabilisants-épaississants, les enzymes et leur mélange.

10. Utilisation de la levure désactivée pour la préparation de l'agent substitut de sel selon les revendications 1 à 9.

11. Composition destinée à l'alimentation humaine et/ou animale comprenant l'agent selon l'une des revendications 1 à 9.

12. Utilisation de l'agent selon l'une des revendications 1 à 9 comme substitut total ou partiel de NaCl dans la fabrication panaire.

13. Utilisation de l'agent selon la revendication 12, **caractérisée en ce que** la fabrication panaire est la fabrication du pain de tradition française.

14. Utilisation de l'agent selon l'une des revendications 1 à 9 comme substitut total ou partiel de NaCl dans les plats culinaires préparés.

15. Utilisation selon la revendication 12, **caractérisée en ce que** la levure désactivée et/ou la levure désactivée comprenant un extrait de céréale est présente en une quantité allant d'environ 0,4 à 1% en poids, de préférence de 0,6 à 0,8 % en poids, et plus préférentiellement de 0,7 % en poids par rapport au poids total de farine lors de la fabrication panaire.

16. Utilisation selon la revendication 12, **caractérisée en ce que** le composé salant est présent en une quantité allant d'environ 0,9% à 1,6 % en poids par rapport au poids total de farine en fabrication panaire.

## Patentansprüche

1. Ersatzmittel für Salz (NaCl), **dadurch gekennzeichnet, dass** es inaktivierte Hefe und eine salzende Verbindung, ausgewählt aus NaCl, einem Kaliumsalz, einem Ammoniumsalz, einem Magnesiumsalz und deren Mischung, umfasst.

2. Mittel nach Anspruch 1, **dadurch gekennzeichnet, dass** das Verhältnis salzende Verbindung / inaktive Hefe zwischen 1 und 5,7 liegt.

3. Mittel nach einem der Ansprüche 1 oder 2, **dadurch gekennzeichnet, dass** der NaCl-Gehalt bezogen auf die salzende Verbindung zwischen 0 und 100 Gew.-% bezogen auf das Gewicht der salzenden Verbindung liegt.

4. Mittel nach Anspruch 1, **dadurch gekennzeichnet, dass** die inaktivierte Hefe ausgewählt ist aus inaktivierter Hefe alleine, Getreideextrakt umfassender inaktivierter Hefe und deren Mischung.

5. Mittel nach Anspruch 1, **dadurch gekennzeichnet, dass** das Kaliumsalz KCl ist, dass das Ammoniumsalz NH₄Cl ist, und dass das Magnesiumsalz MgCl₂ ist.

6. Mittel nach einem der Ansprüche 1 oder 4, **dadurch gekennzeichnet, dass** die Hefe zur Gattung Saccharomyces gehört, und stärker bevorzugt zur Art *Saccharomyces cerevisiae.*

7. Mittel nach Anspruch 4, **dadurch gekennzeichnet, dass** das Getreideextrakt ein Malzextrakt ist.

8. Mittel nach einem der Ansprüche 1 bis 7, **dadurch gekennzeichnet, dass** es weiterhin ein weiteres Ersatzmittel für Salz, ausgewählt aus Mineralverbindungen, aus Milch stammenden Verbindungen, Aromen und deren Mischung, umfasst.

9. Mittel nach einem der Ansprüche 1 bis 8, **dadurch gekennzeichnet, dass** es weiterhin ein Verbesserungsmittel zur Brotherstellung, ausgewählt aus Ascorbinsäure, Emulgatoren, Stabilisierungs-Verdickungsmitteln, Enzymen und deren Mischung, umfasst.

10. Verwendung von inaktivierter Hefe zur Herstellung des Ersatzmittels für Salz nach den Ansprüchen 1 bis 9.

11. Zusammensetzung, die für die menschliche und/oder tierische Ernährung vorgesehen ist, umfassend das Mittel nach einem der Ansprüche 1 bis 9.

12. Verwendung des Mittels nach einem der Ansprüche 1 bis 9 als vollständiger oder teilweiser Ersatz für NaCl in der Brotherstellung.

13. Verwendung des Mittels nach Anspruch 12, **dadurch gekennzeichnet, dass** die Brotherstellung Herstellung von Brot nach französischer Tradition ist.

14. Verwendung des Mittels nach einem der Ansprüche 1 bis 9 als vollständiger oder teilweiser Ersatz für NaCl in Fertiggerichten.

15. Verwendung nach Anspruch 12, **dadurch gekennzeichnet, dass** die inaktivierte Hefe und/oder die Getreideextrakt umfassende inaktivierte Hefe in einer Menge von ungefähr 0,4 bis 1 Gew.-%, bevorzugt von 0,6 bis 0,8 Gew.-%, stärker bevorzugt von 0,7 Gew.-% bezogen auf das Gesamtgewicht von Mehl während der Brotherstellung vorhanden ist.

16. Verwendung nach Anspruch 12, **dadurch gekennzeichnet, dass** die salzende Verbindung in einer Menge von ungefähr 0,9 Gew.-% bis 1,6 Gew.-% bezogen auf das Gesamtgewicht von Mehl in der Brotherstellung vorhanden ist.

## Claims

1. Substitute for salt (NaCl), **characterized in that** it comprises deactivated yeast and a salt compound selected from NaCl, a potassium salt, an ammonium salt, a magnesium salt and mixtures thereof.

2. Substitute according to Claim 1, **characterized in that** the salt compound / deactivated yeast ratio is between 1 and 5.7.

3. Substitute according to either of Claims 1 and 2, **characterized in that** the content of NaCl relative to the salt compound is between 0 and 100 wt.% relative to the weight of the salt compound.

4. Substitute according to Claim 1, **characterized in that** the deactivated yeast is selected from deactivated yeast alone, deactivated yeast comprising a cereal extract, and a mixture thereof.

5. Substitute according to Claim 1, **characterized in that** the potassium salt is KC1, **in that** the ammonium salt is NH₄Cl and **in that** the magnesium salt is MgCl₂.

6. Substitute according to either of Claims 1 and 4, **characterized in that** the yeast belongs to the genus Saccharomyces, and more preferably to the species *Saccharomyces cerevisiae.*

7. Substitute according to Claim 4, **characterized in that** the cereal extract is a malt extract.

8. Substitute according to one of Claims 1 to 7, **characterized in that** it further comprises another salt substitute selected from mineral compounds, compounds derived from milk, flavourings, and a mixture thereof.

9. Substitute according to one of Claims 1 to 8, **characterized in that** it further comprises a breadmaking improver selected from ascorbic acid, emulsifiers, stabilizing-thickening agents, enzymes and mixtures thereof.

10. Use of deactivated yeast for preparing the salt substitute according to Claims 1 to 9.

11. Composition intended for human and/or animal nutrition comprising the substitute according to one of Claims 1 to 9.

12. Use of the substitute according to one of Claims 1 to 9 as total or partial substitute for NaCl in breadmaking.

13. Use of the substitute according to Claim 12, **characterized in that** the breadmaking is the production of traditional French bread.

14. Use of the substitute according to one of Claims 1 to 9 as total or partial substitute for NaCl in prepared dishes.

15. Use according to Claim 12, **characterized in that** the deactivated yeast and/or the deactivated yeast comprising a cereal extract is present in an amount in the range from about 0.4 to 1 wt.%, preferably from 0.6 to 0.8 wt.%, and more preferably 0.7 wt.% relative to the total weight of flour in breadmaking.

16. Use according to Claim 12, **characterized in that** the salt compound is present in an amount in the range from about 0.9 to 1.6 wt.% relative to the total weight of flour in breadmaking.
